# EUROPÄISCHE PATENTSCHRIFT

(11) **EP 2 822 261 B1**
(45) Veröffentlichungstag und Bekanntmachung des Hinweises auf die Patenterteilung: **16.09.2020**
(21) Anmeldenummer: 14002120.5
(22) Anmeldetag: 19.06.2014
(51) Int. Cl.: H04M 3/428, H04M 3/51, H04M 3/523, H04M 7/00

(54) **VERFAHREN UND ANORDNUNG ZUR POOLINIERUNG MULTIMODALER WARTEFELDER UND SUCHE AKTUELLER TELEFONANRUFE FÜR EINEN BENUTZER IN EINEM TELEKOMMUNIKATIONSNETZ**
METHOD AND ASSEMBLY FOR POOLING MULTIMODAL WAITING FIELDS AND SEARCHING CURRENT TELEPHONE CALLS FOR A USER IN A TELECOMMUNICATIONS NETWORK
PROCÉDÉ ET AGENCEMENT D'UNITISATION DE FILES D'ATTENTE MULTIMODALES ET RECHERCHE D'APPELS TÉLÉPHONIQUES ACTUELS POUR UN UTILISATEUR DANS UN RÉSEAU DE COMMUNICATION

(30) Priorität: 20.06.2013 DE 102013010208
(43) Veröffentlichungstag der Anmeldung: 07.01.2015
(73) Patentinhaber: SIKOM Software GmbH, 69126 Heidelberg (DE)
(72) Erfinder: Heintz, Frank, D-08064 Zwickau (DE)
(74) Vertreter: Dreykorn-Lindner, Werner

(56) Entgegenhaltungen:
- EP-A2- 1 091 548
- US-A1- 2011 185 293
- US-B1- 7 564 962

## Beschreibung

Die Erfindung betrifft ein Verfahren zur Realisierung multimodaler Wartefelder einschließlich der Suche aktueller Telefonanrufe für einen Benutzer in einem Telekommunikationsnetz gemäß dem Patentanspruch 1 und Patentanspruch 6 und eine Anordnung hierzu gemäß dem Patentanspruch 8.

Bei vielen telefonischen Diensten müssen die Benutzer (Anrufer) warten bis die erforderlichen Ressourcen zur Bearbeitung der Dienste verfügbar sind. Dafür kommen in den Telefonsystemen Wartefelder zum Einsatz. Diese Wartefelder können dabei ganz unterschiedliche Funktionalitäten beinhalten. In den einfachsten Fällen werden nur Wartemusik (Music on hold) oder Ruftöne eingespielt. Bei leistungsstärkeren Systemen werden ganze Dialoge abgearbeitet (IVR). Solche Systeme reagieren auch auf Benutzereingaben per Sprache oder Telefontasten (DTMF) und geben Audioinformationen aus.
Zur Nutzung der Wartezeit ist aus der WO 2006/032690 ein Verfahren zum Signalisieren des Endes eines Wartezustands einer gehaltenen Telefonverbindung bekannt. Wie dort beschrieben ist, wird der anrufende Teilnehmer bei Hotlines oder Servicecentern häufig auf eine Parkposition gelegt und bekommt eine Wartemusik zu hören. Gleiches gilt auch, wenn der Kommunikationspartner eine Rückfrage macht und man deshalb in einen Haltezustand gelegt wird. Damit kann der Teilnehmer des wartenden Endgerätes nicht telefonieren, obwohl eine Verbindung besteht. Die Verbindung ist beispielsweise ein durchgeschalteter Sprachkanal oder eine Verbindung auf einer höheren Protokollebene in einem Datenpaketübertragungsnetz, in dem die Sprachdaten auf unteren Protokollebenen verbindungslos übertragen werden.

Das wartende Endgerät ist beispielsweise mit einem automatischen Anrufbeantwortungssystem verbunden oder es befindet sich in einem Haltezustand bzw. in einem Parkzustand. In vielen Fällen muss der Teilnehmer des wartenden Endgerätes auch im Wartezustand Gebühren für die Verbindung zahlen. Als Endesignal für den das wartende Endgerät nutzenden Teilnehmer lässt sich beispielsweise auf einer Anzeigeeinheit eines Gerätes eine Meldung ausgeben, an der der wartende Teilnehmer erkennt, dass er wieder mit dem gerufenen Teilnehmer verbunden ist. Die Wartezeit könnte sinnvoller genutzt werden, wenn man beispielsweise seinen Telefonhörer zur Seite legen könnte, und benachrichtigt werden würde, wenn sich der Kommunikationspartner meldet. Für diesen Zweck reicht beispielsweise. eine Meldung auf einer Anzeigeeinheit des Telefons aber nicht aus, weil man dann ständig die Anzeigeeinheit im Auge haben müsste. Deshalb wird bei dem aus der WO 2006/032690 bekannten Verfahren zusätzlich ein Endesignal erzeugt, das auch bei einem ankommenden Ruf am Endgerät ausgegeben wird oder das ein extra zur Signalisierung erzeugtes Tonsignal ist, das das Ende des Wartezustandes signalisiert. Damit kann der Teilnehmer am wartenden Endgerät seine Aufmerksamkeit vollständig einer anderen Tätigkeit zuwenden und ist durch den Wartezustand in seinen Tätigkeiten nicht beeinträchtigt. Die Benutzerfreundlichkeit und Akzeptanz von Diensten mit Wartezustand lässt sich so auf einfache Art erhöhen. Bei einer Weiterbildung des Verfahrens wird beim Beenden des Wartezustandes eine Endenachricht erzeugt. Das Endesignal wird abhängig von der Endenachricht ausgegeben. Endenachrichten treten in vielen standardisierten Diensten mit einem Wartezustand auf. Beispielsweise wird der Wartezustand gemäß ITU-T-Standard (International Telecommunication Union - Telecommunication Standardization Sector) Q.733.2 oder gemäß ITUT-Standard Q.733.4 erzeugt. Der Standard Q.733.2 betrifft den Dienst "CaIl Hold", d.h. den Dienst "Gespräch halten". Gemäß diesem Standard ist die Endenachricht eine CPG-Nachricht (CaIl Progress Message) mit einem Retrieve-Element, falls das Erzeugen des Endesignals von einer Vermittlungsstelle gesteuert wird. Dagegen ist die Endenachricht eine Notify-Nachricht mit Retrieve-Element, falls das Erzeugen des Endesignals vom Endgerät selbst gesteuert wird. Bei einer anderen Weiterbildung wird der Wartezustand gemäß ITU-T-Standard H.450.4 erzeugt. Der Standard H.450.4 betrifft den Dienst "CaIl Hold Supplementary Service for H.323". Die Standard-Gruppe um den Standard H.323 betrifft eine Übertragung von Sprachdaten, Bilddaten usw. in Datenpaketen, die einen Paketkopf mit einer Zieladresse und einen Paketrumpf mit den Nutzdaten enthalten. Beispielsweise werden die Datenpakete gemäß Internetprotokoll übertragen. Im Fall der Berücksichtigung des Standards H.450.4 ist die Endenachricht eine Facility-Nachricht mit Retrieve NotificElement. Alternativ ist die Endenachricht beispielsweise eine Facility-Nachricht mit Remote Retrieve-Element.

Weiterhin ist aus der WO 2013/054109 eine auf dem Internet Protocol (IP)-basierende TK-Anlage für die Bereitstellung von Medien und/oder Werbung für die Nutzer der Telefon-Systeme bekannt. Um dem Nutzer beispielsweise in einer Call-Center Warteschlange nicht Informationen bereitzustellen, die dieser nicht hören will oder Werbung wiederzugeben, die für ihn nicht relevant ist und den Nutzer ärgert, wird eine Medien-Erweiterung und eine Kommunikationsschnittstelle für die Kommunikation über das Internet zur Verfügung gestellt, welche aufweist:
- einen Authentifizierungsserver mit mindestens einer Kommunikationsschnittstelle zum Kommunizieren über das Internet und welcher auf der Basis von Telefon-Kennungen derart konfiguriert ist, dass ein Anruf von dem ersten authentifizierten Telefon zur Verbindung des Anrufs zu einem zweiten Telefon hergestellt wird und
- einen Medien-Server, der mit dem Authentifizierungsserver verbunden ist, um von dem Authentifizierungs-Server den Authentifizierung-Anruf zu empfangen und um die aufgebaute Anrufverbindung zu authentifizieren, wobei der Medien-Server über eine Kommunikationsschnittstelle für die Kommunikation über das Internet konfiguriert ist und die aufgebaute Anrufverbindung überwacht, um festzustellen, ob das erste Telefon gehalten ist und als Reaktion auf diese Detektion, Medien auf dem Media-Server dem ersten Telefon zur Verfügung zu stellen.

Allgemein gesprochen, ermöglicht das aus der. WO 2013/054109 bekannte System die Zeit, die ein Anrufer in Warteposition ist, dafür zu verwenden, um an einen Anrufer eine personalisierte/individuelle Unterhaltung und Information zu liefern und damit Einnahmen für Werbetreibende zu generieren. Die Verwendung von Telefon-Kennungen, wie hier beschrieben, ermöglicht die Überprüfung der Echtheit des Anrufers und um festzustellen, ob sie Abonnenten des Dienstes sind. Darüber hinaus ermöglicht die Telefon-Kennung die Anrufer-Geschichte aus der System-Datenbank zu extrahieren, um einen gezielteren und persönlichen Service für den Anrufer sicher zu stellen. Der Medienserver kann so konfiguriert werden, dass dieser Daten über einen Anrufer, welcher von einem Kunden des Media Extension-Systems in Warteposition gesetzt ist, aus der Medien-Datenbank in Reaktion auf die Daten des Anrufers gezielt abruft. Hierfür weist das System eine mit dem Medienserver gekoppelte Analyse- und Anrufhistorie-Datenbank auf, welche derart konfiguriert ist, dass die Anrufhistorie und/oder Anrufcharakteristik eines jeden Benutzers des Systems gespeichert wird.

Weiterhin ist aus der EP 1 301 921 B1 eine interaktive Dialogvorrichtung mit einem Dialogmanager und ein Dialogverfahren bekannt, welches eine Spracheingabe und/oder -ausgabe, vorzugsweise unter Verwendung von Schnittstellenverfahren für die maschinelle Sprachverarbeitung, verwendet. Der Dialogmanager dient der Steuerung des Dialogs unter Verwendung der Informationen aus einem Dialogmodel. Er kann einen Nachrichtengenerator veranlassen, eine Nachricht zu erzeugen, die über die Telefonschnittstelle unter Verwendung eines Sprachsynthesizers zu dem Benutzer gesprochen wird. Der Nachrichtengenerator verwendet Informationen aus dem Nachrichtenmodell, um die geeigneten Nachrichten aufzubauen. Der Sprachsynthesizer nutzt eine Spracheinheitdatenbank, die jeweils eine bestimmte Äußerung darstellende Spracheinheiten enthält. Der Dialogmanager weist einen Speicher auf, in dem die während des Dialogs gesammelte Information aufgezeichnet wird. Diese umfasst (a) Information, die die momentane "Überzeugung" des Dialogmanagers bezüglich der Wünsche des Benutzers darstellt, (b) aus dem Dialog gewonnene zeitweilige Information und (c) eine Zustandsvorgeschichte.

Weiterhin ist aus der US 6,751,211 B1 ein Verfahren zur Übertragung von Informationen, insbesondere von Transaktionsdaten und hörbaren Daten zwischen zwei Personen oder Geräten, mittels Realisierung multimodaler Wartefelder bekannt. Hierzu sind u.a. ein Empfänger für Telefonanrufe von einem analogen oder digitalen Endgerät aus, ein Dialogmanager und eine Datenbasis, welche mit einem WEB-Server verbunden ist, vorgesehen. Im Einzelnen klassifiziert der Empfänger den Anruf und meldet die Daten des Anrufes dem Dialogmanager. Der Dialogmanager speichert die Daten temporär in der Datenbasis und erzeugt einen Schlüsselcode, welcher als Resultat der Aufrufe zurück bis zum Empfänger für Telefonanrufe übermittelt wird. Dort wird der Schlüsselcode in ein auf der Telefonverbindung übertragbares Format konvertiert und dem Benutzer am analogen oder digitalen Endgerät präsentiert, so dass die Wartezeit bereits dazu genutzt werden kann, vom Anrufer einige - Informationen zu seiner Person und / oder seines Anliegens abzufragen oder ihm Hinweise zu geben.

Weiterhin ist von US7564962 eine Lösung bekannt, bei der eine Webseite mit einer laufenden Kommunikation zu einem Callcenter verbunden ist. Die Webseite kann durch die Eingabe einer zugehörigen eindeutigen ID abgerufen werden. Die Webseite selbst zeigt Informationen über die Position des Anrufers in der Warteschlange, die erwartete Wartezeit usw. an. Der Anrufer kann den Anrufvorgang durch Interaktion mit der Webseite beeinflussen.

Schließlich ist aus der DE 10 2011 107 994 A1 ein Verfahren und ein System für eine Zusammenarbeitsplattform, beispielsweise ein Web-Konferenzführungssystem, Online-Dokumentenbearbeitung, gemeinsam genutzte Dokumentenablagen oder eine Sprach- und Video-Konferenzführung bekannt, bei dem als ein Kommunikationsendpunkt dargestellte Zusammenarbeitsräume für alle Formen einer Kommunikationssignalisierung adressierbar sind. Das Verfahren umfasst: das Zuweisen einer Kommunikationsendpunkt-Kennung zu einem Zusammenarbeitsraum, der wenigstens eine Instanz hat, das Empfangen einer ankommenden Kommunikation, die an die Kommunikationsendpunkt-Kennung adressiert ist, und das Weiterleiten der ankommenden Kommunikation an wenigstens eine Instanz in dem Zusammenarbeitsraum, wobei der Zusammenarbeitsraum multimodal ist und einen gemeinsam genutzten beständigen Behälter bereitstellt, in dem Instanzen Zusammenarbeitsaktivitäten durchführen können. Das System, umfasst: einen Prozessor, einen Speicher, der Anweisungen speichert, um den Prozessor so zu steuern, dass er Schritte ausführt; die Folgendes umfassen:
- das Zuweisen einer Kommunikationsendpunkt-Kennung zu einem Zusammenarbeitsraum, der wenigstens eine Instanz hat,
- das Empfangen einer ankommenden Kommunikation, die an die Kommunikationsendpunkt-Kennung adressiert ist, und
- das Weiterleiten der ankommenden Kommunikation an wenigstens eine Instanz in dem Zusammenarbeitsraum.

Weiterhin ist ein nichtflüchtiges rechnerlesbares Speichermedium vorgesehen, welches Anweisungen speichert, die, wenn sie durch ein Datenverarbeitungsgerät ausgeführt werden, bewirken, dass das Datenverarbeitungsgerät Schritte ausführt, welche Folgendes umfassen:
- das Zuweisen einer Kommunikationsendpunkt-Kennung zu einem Zusammenarbeitsraum, der wenigstens eine Instanz hat,
- das Empfangen einer ankommenden Kommunikation, die an die Kommunikationsendpunkt-Kennung adressiert ist, und
- das Weiterleiten der ankommenden Kommunikation an wenigstens eine Instanz in dem Zusammenarbeitsraum.

Wie die vorstehende Würdigung des Standes der Technik aufzeigt, sind unterschiedlich ausgestaltete Verfahren und Vorrichtungen für Wartefelder mit ganz unterschiedlichen Funktionalitäten auf verschiedenen kommerziellen Gebieten bekannt. Wenig Beachtung findet jedoch, dass die Wartezeit bereits dazu genutzt werden kann, vom Anrufer einige Informationen zu seiner Person und/oder seines Anliegens abzufragen oder ihm Hinweise zu geben. Dies ist oft sehr umständlich, wenn man sich nur auf den akustischen Kanal der Telefonie beschränken muss. Deshalb fehlen in der Praxis im Hinblick auf die Nutzung von Wartezeiten kostengünstige Verfahren und Systeme, welche auch einen Nutzeffekt für den Anrufer haben und demzufolge eine höhere Akzeptanz haben. Besonders bedeutsam ist dies, weil die Telekommunikations- und Computerindustrie als fortschrittliche, entwicklungsfreudige Industrien anzusehen sind, die schnell Verbesserungen und Vereinfachungen aufgreifen und in die Tat umsetzen.

Der Erfindung liegt die Aufgabe zugrunde, ein Verfahren und eine Anordnung zur Realisierung multimodaler Wartefelder derart auszugestalten, dass ein visuelles Medium genutzt werden kann, welches dem Benutzer Informationen parallel zum Audiokanal optisch zur Verfügung stellt. Dabei soll auch eine Suche für aktuelle Telefonanrufe ermöglicht werden.

Diese Aufgabe wird erfindungsgemäß bei einem Verfahren zur Realisierung multimodaler Wartefelder für einen Benutzer in einem Telekommunikationsnetz mit einem Empfänger für Telefonanrufe von einem analogen oder digitalen Endgerät aus, einem mit mindestens zwei WEB-Komponenten verbundenen Dialogmanager und einer Datenbasis, welche mit einer dritten WEB-Komponente und einer der beiden WEB-Komponentenverbunden ist, gemäß Patentanspruch 1 gelöst, bei dem
a) der Empfänger den Anruf klassifiziert und die Daten des Anrufes dem Dialogmanager meldet,
b) der Dialogmanager den Anruf mit der Adresse der zugeordneten WEB-Applikation der zweiten WEB-Komponente bei einem Dienst der ersten WEB-Komponente registriert, welcher eine entsprechende Schnittstelle zur Verfügung stellt,
c) der Dienst der ersten WEB-Komponente die Daten temporär in der Datenbasis speichert und einen Schlüsselcode erzeugt, welcher als Resultat der Aufrufe zurück bis zum Empfänger für Telefonanrufe übermittelt wird und dort der Schlüsselcode in ein auf der Telefonverbindung übertragbares Format konvertiert und dem Benutzer am analogen oder digitalen Endgerät präsentiert wird,
d) der Benutzer jetzt die WEB-Seite der dritten WEB-Komponente aufrufen kann, welche mindestens ein Eingabefeld zur Erfassung des Schlüsselcodes beinhaltet und
e) nach der Eingabe dieser Code zum serverseitigen Teil der zweiten WEB-Komponente übertragen und dort bearbeitet wird,
derart, dass die Wartezeit bereits dazu genutzt werden kann, vom Anrufer einige Informationen zu seiner Person und/oder seines Anliegens abzufragen oder ihm Hinweise gegeben werden.

Zur Suche für aktuelle Telefonanrufe ist das Verfahren nach Anspruch 6, dadurch gekennzeichnet, dass im Verfahrensschritt d) der Benutzer die Möglichkeit hat über eine, ihm vorher bekannt gemachte Adresse, ein WEB-Portal der zweiten WEB-Komponente zu benutzen, dass der Benutzer dort seine eigene Rufnummer und/oder die Zielrufnummer eingibt und die Eingaben auf der Benutzerseite kodiert und zum WEB-Portal der zweiten WEB-Komponente übertragen werden, dass diese die Parameter dekodiert und jetzt nach einem registrierten Anruf für die vorliegenden Absender- und Zielrufnummer in der Datenbasis sucht und dass wenn ein entsprechender Anruf gefunden wird, eine Weiterleitung der aktuellen WEB-Seite zur Ziel-WEB-Applikation der dritten WEB-Komponente stattfindet, wodurch der Benutzer eine ganz speziell für diesen Anruf vorbereitete WEB-Applikation präsentiert bekommt.

Weiterhin wird diese Aufgabe bei einer Anordnung zur Realisierung multimodaler Wartefelder für einen Benutzer in einem Telekommunikationsnetz, nach Patentanspruch 8 gelöst, bestehend aus:
a) einem Empfänger für Telefonanrufe von einem analogen oder digitalen Endgerät aus,
b) einem mit dem Empfänger für Telefonanrufe und zwei WEB-Komponenten verbundenen Dialogmanager, wobei die erste WEB-Komponente ein Service ist, welcher eine Schnittstelle zur Registrierung von Ereignissen zur Verfügung stellt, und die vorgenannte dritte WEB-Komponente eine WEB-Applikation ist, welche speziell angepasst für den betreffenden Dienst zur Verfügung gestellt wird,
c) eine Datenbasis, welche mit einer zweiten WEB-Komponente, die zur Realisierung eines Dialogs mit dem Benutzer eine WEB-Seite bereitstellt, und der ersten WEB-Komponente verbunden ist, so dass Daten in der Datenbasis ausgetauscht, genutzt und verändert werden können, und
d) ein internetfähiges Endgerät, welches sowohl mit der zweiten WEB-Komponente als auch mit der dritten WEB-Komponente verbindbar ist, wobei der Dialogmanager das Verbindungsglied zwischen der Seite der WEB-Komponenten und dem Empfänger für Telefonanrufe ist, beidseitige Schnittstellen zur Verfügung stellt und für die Synchronisation der Systemzustände sorgt
derart, dass die Wartezeit bereits dazu genutzt werden kann, vom Anrufer einige Informationen zu seiner Person und/oder seines Anliegens abzufragen oder ihm Hinweise gegeben werden.

Das erfindungsgemäße Verfahren und die erfindungsgemäße Anordnung zeigen eine Möglichkeit auf, wie in Wartezeiten zusätzlich ein visuelles Medium genutzt werden kann, welches dem Benutzer Informationen parallel zum Audiokanal optisch zur Verfügung stellt. Weiterhin kann der Benutzer über dieses Medium auch Text-Informationen eingeben, welche dann ebenfalls zur Klassifizierung der Person oder des Grundes seines Anrufens genutzt werden können. Die unterschiedlichen Kanäle können dabei synchronisiert werden und befinden sich somit in dem gleichen Zustand.

Weitere Vorteile und Einzelheiten lassen sich der nachfolgenden Beschreibung einer bevorzugten Ausführungsform der Erfindung unter Bezugnahme auf die Zeichnung entnehmen. In der Zeichnung zeigt:
- FIG. 1: eine Systemübersicht der erfindungsgemäßen Anordnung und
- FIG. 2: ein Sequenzdiagramm des erfindungsgemäßen Verfahrens.

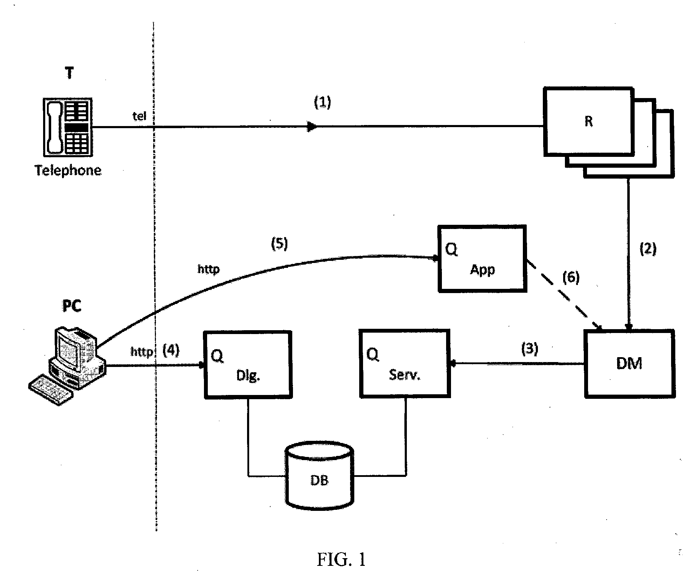

Die in FIG. 1 dargestellte erfindungsgemäße Anordnung besteht im Wesentlichen aus einem Empfänger für Telefonanrufe R, einer modularen WEB-Komponente (World Wide Web) und einem Dialogmanager DM. Das World Wide Web ist ein über das Internet abrufbares System von elektronischen Hypertext-Dokumenten, die durch Hyperlinks miteinander verknüpft sind und über die Protokolle HTTP (Hypertext Transfer Protocol, ein Protokoll zur Übertragung von Daten über ein Netzwerk) bzw. HTTPS (Hyper Text Transfer Protocol Secure, ein Kommunikationsprotokoll im World Wide Web, um Daten abhörsicher zu übertragen) übertragen werden. Zur Nutzung des World Wide Web wird ein Webbrowser benötigt, welcher die Daten vom Webserver holt und zum Beispiel auf einem Bildschirm anzeigt. Der Empfänger für Telefonanrufe R kann in einer Vermittlungsstelle oder einem Gateway (Übergabestelle) des Telekommunikationsnetzes oder bei einem Service-Provider angeordnet sein. Bei der FIG. 1 dargestellten Anordnung ist der Dialogmanager DM eine separate Baugruppe, dieser kann auch im Empfänger für Telefonanrufe R integriert sein.

Die WEB-Komponente besteht aus drei Modulen; das erste Modul/ WEB-Komponente Q-Serv ist ein Service, welcher eine Schnittstelle zur Registrierung von Ereignissen (Telefonanrufen) zur Verfügung stellt. Den Dialog mit dem Benutzer realisiert das zweite Modul/ WEB-Komponente Q-Dlg. Dazu stellt es eine WEB-Seite bereit. Beide WEB-Module Q-Serv und Q-Dlg. benutzen eine Datenbasis DB, um Daten auszutauschen, nutzen und verändern zu können. Das dritte WEB-Modul/Komponente, die Q-App, ist eine WEB-Applikation, die speziell angepasst, für den betreffenden Dienst zur Verfügung gestellt wird. Diese Applikation kann als statische WEB-Seite vorgehalten oder dynamisch bezogen auf die aktuellen Daten (Content) des Dienstes erzeugt werden. Hierbei kann im Rahmen der Erfindung eine WEB 2.0 Technologie eingesetzt werden, um ein automatisches Aktualisieren der WEB-Seite zu ermöglichen. WEB 2.0 basiert auf Cloud-Computing und die Benutzer erstellen, bearbeiten und verteilen Inhalte in quantitativ und qualitativ entscheidendem Maße selbst, unterstützt von interaktiven Anwendungen. Um Web-Anwendungen wie herkömmliche Desktop-Anwendungen bedienen zu können, wird beim erfindungsgemäßen Verfahren AJAX benutzt. AJAX ist ein Akronym für die Wortfolge "Asynchronous JavaScript and XML". Es bezeichnet ein Konzept der asynchronen Datenübertragung zwischen einem Browser und dem Server. Dieses ermöglicht es, HTTP-Anfragen an den Server zu schicken, während eine HTML-Seite (Hypertext Markup Language, eine textbasierte Aufzeichnungssprache zur Strukturierung von Inhalten wie Texten, Bildern und Hyperlinks in Dokumenten) angezeigt wird, und die Seite zu verändern, ohne sie komplett neu zu laden. Der Aufruf erfolgt also als asynchrone Kommunikation, d. h. während die Daten vom Server geladen werden, kann der Nutzer weiter mit der Oberfläche interagieren. Sind die Daten fertig geladen, dann wird eine zuvor benannte JavaScript-Funktion aufgerufen, die die Daten in die Webseite einbinden kann. Damit erhält man eine Benutzeroberfläche, die sehr viel zügiger auf Benutzereingaben reagiert.

Ein Dialogmanager DM stellt das Verbindungsglied zwischen den WEB-Komponenten Q und dem Telefonsystem R dar. Er stellt beidseitige Schnittstellen zur Verfügung und sorgt für die Synchronisation der Systemzustände.

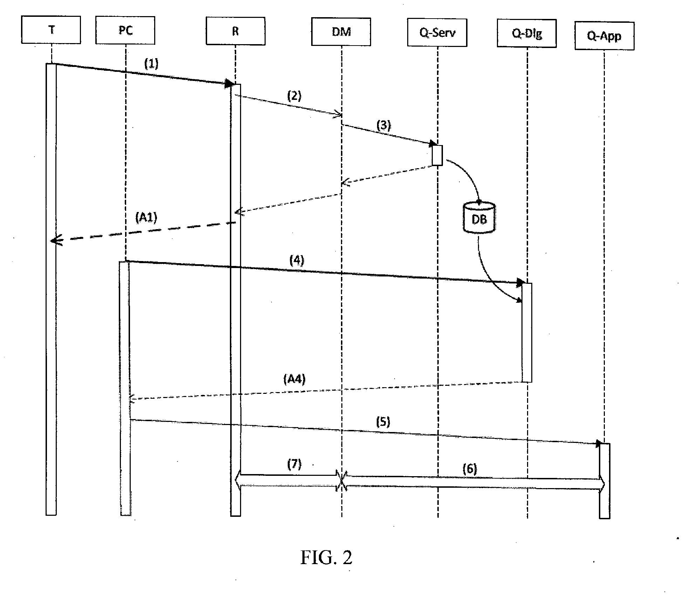

Beim erfindungsgemäßen Verfahren ruft ein Benutzer mit dem analogen oder digitalen Telefonendgerät T die Telefon-Empfangseinrichtung R an (siehe FIG. 2 Pfeil (1)). Dieser Empfänger R klassifiziert den Anruf und meldet die Daten des Anrufes (siehe FIG. 2 Pfeil (2)) dem Dialogmanager DM. Der Dialogmanager DM registriert den Anruf mit der Adresse URL (Uniform Resource Locator) der zugeordneten WEB-Applikation Q-App bei einem Dienst Q-Serv, welcher eine entsprechende Schnittstelle zur Verfügung stellt. Dieser Service speichert die Daten temporär in der Datenbasis DB und erzeugt einen Schlüsselcode. Der Schlüsselcode wird als Resultat der Aufrufe zurück bis zur Telefon-Empfangseinrichtung R übermittelt. Dort wird der Schlüsselcode in ein, auf der Telefonverbindung übertragbares, Format konvertiert und dem Benutzer am Telefon T präsentiert (siehe FIG. 2 Pfeil (A1)).

Wenn im Verfahrensschritt c) nach Anspruch 1 bereits eine Sprachverbindung besteht, kann dieser Schlüsselcode zum Beispiel in Sprache umgesetzt und über den Audiokanal zum analogen Endgerät T übertragen werden. Es ist aber auch möglich, diesen Code im Textformat zu übertragen und zum Beispiel als Displayinformation an einem digitalen Endgerät T darzustellen (z.B. (User To User-Information [UUI] oder SMS (Short Message Service, ein Kurznachrichtendienst).

Der Benutzer kann jetzt die WEB-Seite Q-Dlg. aufrufen (siehe FIG. 2 Pfeil (4)), dessen Adresse ihm bereits bekannt ist oder die ebenfalls als Resultat (siehe FIG. 2 Pfeil (A1)) von der Telefon-Empfangseinrichtung R übertragen wurde. Diese WEB-Seite Q-Dlg. beinhaltet mindestens ein Eingabefeld, zur Erfassung des Schlüsselcodes. Nach der Eingabe wird dieser Code zum serverseitigen Teil der zweiten WEB-Komponente Q-Dlg. übertragen und dort bearbeitet. Diese Bearbeitung besteht im Verfahrensschritt e) nach Anspruch 1 im Wesentlichen aus der Suche des Schlüssels in der Datenbasis DB.

Wenn der Datensatz mit diesem Schlüsselcode gefunden wurde, erfolgt auf Benutzerseite in einem internetfähigen Endgerät PC eine Ersetzung der aktuell angezeigten WEB-Seite der zweiten WEB-Komponente Q-Dlg. durch die der dritten WEB-Komponente Q-App. Damit bekommt der Benutzer jetzt spezielle Informationen zu dem gerade geführten Telefonanruf auch visuell präsentiert. In dieser Phase besteht dann eine multimodale Verbindung durch die Kanäle Telefon und WEB. Aktivitäten auf beiden Kanälen können synchronisiert werden (siehe FIG. 2 Pfeil (6) und (7)), so dass beide denselben Content unterschiedlich präsentieren. Die Synchronisation erfolgt dadurch, dass an geeigneten Stellen in der WEB- und/oder der Telefon-Applikation Funktionsaufrufe eingefügt werden, welche Nachrichten zum Dialogmanager DM senden, wenn sie aktiv werden. Der Dialogmanager DM leitet diese Nachrichten an die zugeordnete Applikation des anderen Kanals (Mode) weiter. Dort dient diese Nachricht dazu, die aktuelle Präsentation den Contents entsprechend anzugleichen, so dass beide Kanäle, Telefon und WEB-Applikation, das gleiche Thema präsentieren. Als Kommunikationskanal kommt ein Netzwerkprotokoll wie zum Beispiel TCP (Transmission Control Protocol, ein Transportprotokoll im Internet) oder UDP (User Datagram Protocol, ein Netzwerkprotokoll) zum Einsatz. Zum Beispiel ist es möglich, Klicks auf Links oder Buttons der Q-App in Ereignisse der Telefon-Empfangseinrichtung zu konvertieren und umgekehrt. So können z.B. dargestellten Passagen der WEB-Seite durch Ansagen kommentiert oder Vermittlungsfunktionen in R gesteuert werden. Andererseits können durch Aktivitäten der Telefonverbindung, wie Spracheingabe oder betätigte Telefontasten, spezielle visuelle Informationen angezeigt oder WEB-Funktionen gesteuert werden.

Die Anordnung in Fig.1 kann auch dazu genutzt werden, eine Suchmaschine für dort registrierte Anrufe zu realisieren. Dazu wir das erfindungsgemäße Verfahren etwas abgeändert.

Wie vorstehend beschrieben, ruft ein Benutzer mit einem Telefonendgerät T eine Telefon-Empfangseinrichtung R an (siehe FIG. 2 Pfeil (1)). Dieser Empfänger R meldet den Anruf am Service Q-Serv an (siehe FIG. 2 Pfeil (2)). Bei der Anmeldung werden Rufnummer des Anrufers und dessen gewählte Rufnummer und zusätzlich eine URL der zugeordneten Ziel-WEB-Applikation übergeben. Es wird vom Service Q-Serv ebenfalls ein Schlüsselcode erzeugt und an den Telefonempfänger R zurückgegeben.

Anders als bei dem vorstehenden beschriebenen Verfahren, wird dieser Schlüsselcode für den Aufbau der WEB-Verbindung nicht benutzt. Vielmehr hat der Benutzer erfindungsgemäß die Möglichkeit über eine, ihm vorher bekannt gemachte Adresse, ein WEB-Portal Q-Dlg. zu benutzen (siehe FIG. 2 Pfeil (4)). Dort gibt er seine eigene Rufnummer und/oder die Zielrufnummer ein. Die Eingaben werden auf der Benutzerseite kodiert und zum WEB-Portal Q-Dlg. übertragen. Die WEB-Anwendung Q-Dlg. dekodiert die Parameter und sucht jetzt nach einem registrierten Anruf für die vorliegenden Absender- und Zielrufnummer in der Datenbasis DB. Wird ein entsprechender Anruf gefunden, so findet eine Weiterleitung der aktuellen WEB-Seite zur Ziel-WEB-Applikation Q-App statt (siehe FIG. 2 Pfeil (5)). Damit bekommt der Benutzer eine ganz speziell für diesen Anruf vorbereitete WEB-Applikation präsentiert. Auch hierbei kann es sich um statische, dynamische oder interaktive WEB-Applikationen handeln. Dies ist nur abhängig vom jeweiligen Anwendungsfall. Die WEB-Applikation Q-App kann zusätzlich benutzt werden, um bei erfolgreich aufgebauter Telefonverbindung dem Benutzer und dessen Gesprächspartner einen zusätzlichen Kommunikationskanal via HTTP zur Verfügung zu stellen. Über diesen könnten z.B. Texte (Chat), Video- oder Audiodaten übertragen bzw. ausgetauscht werden.

Anwendungsbeispiele für das erfindungsgemäße Verfahren sind:
- Anzeige des Wartestatus im Contact Center (Statistische Informationen für Kunden),
- Anzeige und Auswahl möglicher Verbindungsziele in Unternehmen oder Verwaltungen,
- Multimodale Telefon Vermittlung.

Die Erfindung wird durch den Gegenstand der unabhängigen Ansprüche definiert.

## Patentansprüche

1. Verfahren zur Realisierung multimodaler Wartefelder für einen Benutzer in einem Telekommunikationsnetz mit einem in einer Vermittlungsstelle oder einem Gateway des Telekommunikationsnetzes oder bei einem Service-Provider angeordneten Empfänger für Telefonanrufe (R) von einem analogen oder digitalen Endgerät (T) aus, mit drei WEB-Komponenten (Q-Serv, Q-Dlg., Q-App), mit einem mit der ersten und der dritten WEB-Komponente (Q-Serv, Q-App) verbundenen Dialogmanager (DM) und einer Datenbasis (DB), welche mit der zweiten WEB-Komponente (Q-Dlg.) und der ersten WEB-Komponente (Q-Serv) verbunden ist, bei dem:
a) der Empfänger (R) den Anruf klassifiziert und die Daten des Anrufes dem Dialogmanager (DM) meldet,
b) der Dialogmanager (DM) den Anruf mit der Adresse (URL) der zugeordneten WEB-Applikation der dritten WEB-Komponente (Q-App) bei einem Dienst der ersten WEB-Komponente (Q-Serv) registriert, welcher eine Schnittstelle zur Verfügung stellt,
c) der Dienst der ersten WEB-Komponente (Q-Serv) die Daten temporär in der Datenbasis (DB) speichert und einen Schlüsselcode erzeugt, welcher als Resultat der Aufrufe zurück bis zum Empfänger für Telefonanrufe (R) übermittelt wird und dort der Schlüsselcode in ein auf der Telefonverbindung übertragbares Format konvertiert und dem Benutzer am analogen oder digitalen Endgerät (T) präsentiert wird,
d) der Benutzer mittels einem internetfähigen Endgerät (PC) jetzt die WEB-Seite der dritten WEB-Komponente (Q-App) aufrufen kann, welche mindestens ein Eingabefeld zur Erfassung des Schlüsselcodes beinhaltet,
e) nach der Eingabe dieser Code zum serverseitigen Teil der zweiten WEB-Komponente (Q-Dlg.) übertragen und dort bearbeitet wird und
f) der Dialogmanager (DM) das Verbindungsglied zwischen der Seite der drei WEB-Komponenten (Q-Serv, Q-Dlg., Q-App) und dem Empfänger für Telefonanrufe (R) ist und unterschiedlichen Kanäle der WEB-Applikation (Q-App) und/oder einer Telefon-Applikation synchronisiert, welche sich somit im gleichen Zustand befinden, indem in der WEB-Applikation (Q-App) und/oder der Telefon-Applikation Funktionsaufrufe eingefügt werden, welche Nachrichten zum Dialogmanager (DM) senden, wenn sie aktiv werden, so dass dem Benutzer Informationen parallel zum Audiokanal optisch zur Verfügung gestellt werden und die Wartezeit bereits dazu genutzt werden kann, vom Anrufer einige Informationen zu seiner Person und/oder seines Anliegens abzufragen oder ihm Hinweise zu geben.

2. Verfahren nach Anspruch 1, wobei wenn im Verfahrensschritt c) bereits eine Sprachverbindung besteht, dieser Schlüsselcode in Sprache umgesetzt und über den Audiokanal zum analogen Endgerät (T) übertragen wird oder dass dieser Code im Textformat übertragen und als Displayinformation an einem digitalen Endgerät (T) dargestellt wird.

3. Verfahren nach Anspruch 1, wobei zur Bearbeitung im Verfahrensschritt e) der Schlüssel in der Datenbasis (DB) gesucht wird, dass wenn der Datensatz mit diesem Schlüsselcode gefunden wurde, auf der Benutzerseite im internetfähigen Endgerät (PC) eine Ersetzung der aktuell angezeigten WEB-Seite der zweiten WEB-Komponente (Q-Dlg.) durch die der dritten WEB-Komponente (Q-App) erfolgt, wobei in dieser Phase dann eine multimodale Verbindung über einen Telefon-Kanal und einen WEB-Kanal besteht und Aktivitäten auf beiden Kanälen durch ein Zusammenwirken synchronisiert werden können, so dass beide denselben Content unterschiedlich präsentieren und der Benutzer jetzt spezielle Informationen zu dem gerade geführten Telefonanruf auch visuell präsentiert bekommt.

4. Verfahren nach Anspruch 3, wobei die Applikation der dritten WEB-Komponente (Q-App) als statische WEB-Seite vorgehalten oder dynamisch bezogen auf die aktuellen Daten des Dienstes erzeugt werden kann.

5. Verfahren nach Anspruch 4, wobei zur Erzeugung dynamischer Webseiten als WEB 2.0 Technologie AJAX eingesetzt wird, um ein automatisches Aktualisieren der WEB-Seite zu ermöglichen.

6. Verfahren nach Anspruch 1, wobei zur Realisierung einer Suchmaschine für aktuelle Telefonanrufe im Verfahrensschritt d) der Benutzer die Möglichkeit hat über eine, ihm vorher bekannt gemachte Adresse, ein WEB-Portal der zweiten WEB-Komponente (Q-Dlg.) zu benutzen, dass der Benutzer dort seine eigene Rufnummer und/oder die Zielrufnummer eingibt und die Eingaben auf der Benutzerseite kodiert und zum WEB-Portal der zweiten WEB-Komponente (Q-Dlg.) übertragen werden, dass diese die Parameter dekodiert und jetzt nach einem registrierten Anruf für die vorliegenden Absender- und Zielrufnummer in der Datenbasis (DB) sucht und dass wenn ein entsprechender Anruf gefunden wird, eine Weiterleitung der aktuellen WEB-Seite zur Ziel-WEB-Applikation der dritten WEB-Komponente (Q-App) stattfindet, wodurch der Benutzer eine ganz speziell für diesen Anruf vorbereitete WEB-Applikation präsentiert bekommt.

7. Verfahren nach Anspruch 6, wobei die WEB-Applikation der dritten WEB-Komponente (Q-App) zusätzlich benutzt werden kann, um bei erfolgreich aufgebauter Telefonverbindung den Benutzer und dessen Gesprächspartner einen zusätzlichen Kommunikationskanal via HTTP zur Verfügung zu stellen, wobei über diesen Texte, Video- oder Audiodaten übertragen bzw. ausgetauscht werden können.

8. Anordnung zur Realisierung multimodaler Wartefelder für einen Benutzer in einem Telekommunikationsnetz, bestehend aus:
a) einem in einer Vermittlungsstelle oder einem Gateway (Übergabestelle) des Telekommunikationsnetzes oder bei einem Service-Provider angeordneten Empfänger für Telefonanrufe (R) von einem analogen oder digitalen Endgerät (T) aus,
b) einem mit dem Empfänger für Telefonanrufe (R) und zwei WEB-Komponenten (Q-Serv, Q-App) verbundenen Dialogmanager (DM), wobei die erste WEB-Komponente (Q-Serv) ein Service ist, welcher eine Schnittstelle zur Registrierung von Ereignissen zur Verfügung stellt, und die vorgenannte dritte WEB-Komponente (Q-App) eine WEB-Applikation ist, welche speziell angepasst für den betreffenden Dienst zur Verfügung gestellt wird,
c) eine Datenbasis (DB), welche mit einer zweiten WEB-Komponente (Q-Dlg.), die zur Realisierung eines Dialogs mit dem Benutzer eine WEB-Seite bereitstellt, und der ersten WEB-Komponente (Q-Serv) verbunden ist, so dass Daten in der Datenbasis (DB) ausgetauscht, genutzt und verändert werden können,
d) ein internetfähiges Endgerät (PC), welches sowohl mit der zweiten WEB-Komponente (Q-Dlg.) als auch mit der dritten WEB-Komponente (Q-App) verbindbar ist, wobei der Dialogmanager (DM) das Verbindungsglied zwischen der Seite der WEB-Komponenten (Q-Serv, Q-Dlg., Q-App) und dem Empfänger für Telefonanrufe (R) ist, beidseitige Schnittstellen zur Verfügung stellt und für die Synchronisation der Systemzustände sorgt,
e) der Dienst der ersten WEB-Komponente (Q-Serv) die Daten temporär in der Datenbasis (DB) speichern und einen Schlüsselcode erzeugten kann, welcher als Resultat der Aufrufe zurück bis zum Empfänger für Telefonanrufe (R) übermittelt und dort der Schlüsselcode in ein auf der Telefonverbindung übertragbares Format konvertiert und dem Benutzer am analogen oder digitalen Endgerät (T) präsentiert werden kann und
f) der Dialogmanager (DM) unterschiedliche Kanäle der WEB-Applikation (Q-App) und/oder einer Telefon-Applikation synchronisieren kann, welche sich somit im gleichen Zustand befinden, indem in der WEB-Applikation (Q-App) und/oder der Telefon-Applikation Funktionsaufrufe eingefügt werden können, welche Nachrichten zum Dialogmanager (DM) senden, wenn sie aktiv werden, so dass dem Benutzer Informationen parallel zum Audiokanal optisch zur Verfügung gestellt werden können und die Wartezeit bereits dazu genutzt werden kann, vom Anrufer einige Informationen zu seiner Person und/oder seines Anliegens abzufragen oder ihm Hinweise geben zu können.

9. Anordnung nach Anspruch 8, wobei die Anwendung als Suchmaschine mittels der zweiten und dritten WEB-Komponente (Q-Dlg., Q-App), wobei die zweite WEB-Komponente (Q-Dlg.) ein WEB-Portal aufweist.

## Claims

1. A method for realizing multimodal waiting fields for a user in a telecommunications network having a receiver for telephone calls (R) arranged in a switching center or a gateway of the telecommunications network or in the case of a service provider for telephone calls (R) from an analog or digital terminal (T), having three WEB components (Q-Serv, Q-Dlg., Q-App), a dialog manager (DM) connected to the first and the third WEB components (Q-Serv, Q-App), and a database (DB) which is connected to the second WEB component (Q-Dlg.) and to the first WEB component (Q-Serv), in which:
a) the receiver (R) classifies the call and reports the data of the call to the dialog manager (DM),
b) the dialog manager (DM) registers the call with the address (URL) of the associated WEB application of the third WEB component (Q-App) in the case of a service of the first WEB component (Q-Serv) which provides an interface,
c) the service of the first WEB component (Q-Serv) temporarily stores the data in the database (DB) and generates a key code which is transmitted back to the receiver for telephone calls (R) as a result of the calls and is converted there into a format which can be transmitted on the telephone connection and is presented to the user on the analog or digital terminal (T),
d) the user can now call up the WEB page of the third WEB component (Q-App) by means of an Internet-capable terminal (PC), said WEB page containing at least one input field for detecting the key code,
e) after the input of this code is transmitted to the server-side part of the second WEB component (Q-Dlg.) and is processed there and
f) the dialog manager (DM) is the connecting element between the side of the three WEB components (Q-Serv, Q-Dlg., Q-App) and the receiver for telephone calls (R) and synchronize different channels of the WEB application (Q-App) and/or a telephone application, which are thus in the same state, in that function calls are inserted in the WEB application (Q-App) and/or the telephone application, which function calls send messages to the dialog manager (DM) if they become active, so that information parallel to the audio channel is optically available to the user and the waiting time can already be used to inquire from the caller some information relating to his person and/or his request or to give hints to him.

2. The method according to claim 1, wherein, in method step c), there is already a voice connection, this key code is converted into speech and transmitted via the audio channel to the analog terminal (T), or that this code is transmitted in the text format and is represented as display information on a digital terminal (T).

3. The method according to claim 1, wherein, for processing in method step e), the key is searched in the database (DB), that if the data record with this key code was found, on the user side in the Internet-capable terminal (PC) a replacement of the currently WEB side of the second WEB component (Q-Dlg.) occurs by means of the third WEB component (Q-App), wherein in this phase there is then a multimodal connection via a telephone channel and a WEB channel and activities on both channels can be synchronized by interaction, so that both present the same content differently and that user now also special information to the telephone call being guided are visually presented.

4. The method according to claim 3, wherein the application of the third WEB component (Q-App) can be stored as a static WEB page or can be generated dynamically with respect to the current data of the service.

5. The method according to claim 4, wherein for generating dynamic web pages WEB 2.0 technology AJAX is used to enable automatic updating of the WEB page.

6. The method according to claim 1, wherein, in order to implement a search engine for current telephone calls in method step d), the user has the possibility of a WEB portal of the second WEB component (Q-Dlg.) in such a way that the user inputs his own call number and/or the destination call number there and codes the inputs on the user side and leads to the WEB portal of the second WEB component (Q-Dlg.) are transmitted in such a way that they decode the parameters and now search for a registered call for the present sender and destination call number in the database (DB) and that if a corresponding call is found, a wake-up of the current WEB page to the destination WEB application of the third WEB component (Q-App) takes place, as a result of which the user gets presented a WEB application prepared in particular for this call.

7. The method according to claim 6, wherein the WEB application of the third WEB component (Q-App) can additionally be used in order, if the telephone connection has been successfully established between the user and his dialogue partner, to add an additional communication channel via HTTP, wherein video or audio data can be transmitted or exchanged via said text.

8. An arrangement for realizing multi-modal waiting fields for a user in a telecommunications network consisting of:
a) a receiver for telephone calls (R), arranged in a switching center or a gateway (transfer point) of the telecommunications network or in the case of a service provider, for telephone calls (R) from an analogue or digital terminal (T),
b) a dialog manager (DM) connected to the recipient for telephone calls (R) and two WEB components (Q-Serv, Q-App), wherein the first WEB component (Q-Serv) is a service which provides an interface for registering events, and the aforementioned third WEB component (Q-App) is a WEB application which is made available specifically for the service concerned,
c) a database (DB) which is connected to a second WFB component (Q-Dlg.), which provides a WRB page for implementing a dialogue with the user, and is connected to the first WEB component (Q-Serv), so that data can be exchanged, used and changed in the database (DB),
d) an Internet-capable terminal (PC) which is connected both to the second WEB component (Q-Dlg.) and to the third WEB component (Q-App), wherein the dialog manager (DM) is the connecting element between the side of the WEB components (Q-Serv, Q-Dlg., Q-App) and the receiver for telephone calls (R) and provides interfaces on both sides and ensures synchronization of the system states,
e) the service of the first WEB component (Q-Serv) temporarily stores the data in the database (DB) and can generate a key code which, as a result of the calls, is transmitted back to the receiver for telephone calls (R) where the key code can be converted into a format which can be transmitted on the telephone connection and can be presented to the user on the analog or digital terminal (T) and
f) the dialog manager (DM) synchronize different channels of the WEB application (Q-App) and/or a telephone application, which are thus in the same state, in that function calls can be inserted in the WEB application (Q-App) and/or the telephone application, which function calls send messages to the dialog manager (DM) if they become active, so that information can be made available to the user in parallel with the audio channel and the waiting time can already be used to query some information from the caller relating to his person and/or his request or to give hints to him.

9. The arrangement according to claim 8, wherein the application is implemented as a search engine by means of the second and third WEB components (Q-Dlg., Q-App), wherein the second WEB component (Q-Dlg.) having a WEB portal.

## Revendications

1. Un procédé pour réaliser des champs d'attente multimodaux pour un utilisateur dans un réseau de télécommunications ayant un récepteur pour des appels téléphoniques (R) disposés dans un centre de commutation ou une passerelle du réseau de télécommunications ou dans le cas d'un fournisseur de services pour des appels téléphoniques (R) à partir d'un terminal analogique ou numérique (T), ayant trois composantes WEB (Q-Serv, Q-Dlg., Q-App), un gestionnaire de dialogue (DM) connecté aux premier et troisième composants WEB (Q-Serv, Q-App), et une base de données (DB), qui est reliée au deuxième composant WEB (Q-Dlg.) et au premier composant WEB (Q-Serv), dans lequel:
a) le récepteur (R) classifie l'appel et rapporte les données de l'appel au gestionnaire de dialogue (DM),
b) le gestionnaire de dialogue (DM) enregistre l'appel avec l'adresse (URL) de l'application WEB associée du troisième composant WEB (Q-App) dans le cas d'un service du premier composant WEB (Q-Serv), qui fournit une interface,
c) le service du premier composant WEB (Q-Serv) stocke temporairement les données dans la base de données (DB) et génère un code clé, qui est renvoyé au récepteur pour les appels téléphoniques (R) suite aux appels et qui est converti en un format qui peut être transmis sur la connexion téléphonique et qui est présenté à l'utilisateur sur le terminal analogique ou numérique (T),
d) l'utilisateur peut désormais appeler la page WEB du troisième composant WEB (Q-App) au moyen d'un terminal compatible Internet (PC), ladite page WEB contenant au moins un champ d'entrée pour détecter le code clé,
e) après que l'entrée de ce code est transmise à la partie côté serveur du second composant WEB (Q-Dlg.) et est traité dans celui-ci et
f) le gestionnaire de dialogue (DM) est l'élément de liaison entre le côté des trois composants WEB (Q-Serv, Q-Dlg., Q-App) et le récepteur pour appels téléphoniques (R) et synchroniser différents canaux de l'application WEB (Q-App) et/ou une application téléphonique, qui sont ainsi dans le même état, en ce que des appels de fonction sont insérés dans l'application WEB (Q-App) et/ou l'application téléphonique, lesquels appels de fonction envoient des messages au gestionnaire de dialogue (DM), s'ils deviennent actifs, de telle sorte que des informations parallèles au canal audio sont optiquement disponibles pour l'utilisateur et le temps d'attente peut déjà être utilisé pour interroger à partir de l'appelant certaines informations relatives à sa personne et/ou à sa demande ou pour donner des indications à celui-ci.

2. Le procédé selon la revendication 1, dans lequel, dans l'étape c), il existe déjà une connexion vocale, ce code clé est converti en parole et transmis via le canal audio au terminal analogique (T), ou que ce code est transmis dans le format texte et est représenté en tant qu'information d'affichage sur un terminal numérique (T).

3. Le procédé selon la revendication 1, dans lequel, pour le traitement dans l'étape e), la clé est recherchée dans la base de données (DB), que si l'enregistrement de données avec ce code clé a été trouvé, du côté utilisateur dans la borne compatible Internet (PC), un remplacement du côté actuellement WEB du deuxième composant WEB (Q-Dlg.) est effectuée par le moyen du troisième composant WEB (Q-App), dans cette phase, il y a alors une connexion multimodale par l'intermédiaire d'un canal téléphonique et un canal WEB et des activités sur les deux canaux peuvent être synchronisées par interaction, de telle sorte que tous les deux présentent le même contenu différemment et que l'utilisateur maintenant des informations spéciales à l'appel téléphonique, qui est guidé, sont aussi visuellement présentés.

4. Le procédé selon la revendication 3, dans lequel l'application du troisième composant WEB (Q-App) peut être stockée en tant que page WEB statique ou peut être générée dynamiquement par rapport aux données actuelles du service.

5. Le procédé de la revendication 4, dans lequel la génération de pages web dynamiques WEB 2,0 la technologie AJAX est utilisé pour permettre une mise à jour automatique de la page Web.

6. Le procédé selon la revendication 1, dans lequel, pour mettre en œuvre un moteur de recherche pour des appels téléphoniques actuels dans l'étape d), l'utilisateur a la possibilité d'un portail WEB du deuxième composant WEB (Q-Dlg.) de telle sorte que l'utilisateur entre son propre numéro d'appel et/ou le numéro d'appel de destination, et code les entrées sur le côté utilisateur et mène au portail WEB du second composant WEB (Q-Dlg.) sont transmis de telle sorte qu'ils décodent les paramètres et recherchent désormais un appel enregistré pour le présent numéro d'appel d'expéditeur et de destination dans la base de données (DB) et que si un appel correspondant est trouvé, une réveil de la page WEB courante vers l'application WEB de destination du troisième composant WEB (Q-App) a lieu, ce qui permet à l'utilisateur de présenter une application WEB préparée en particulier pour cet appel.

7. Le procédé selon la revendication 6, dans lequel l'application WEB du troisième composant WEB (Q-App) peut en outre être utilisée pour, si la connexion téléphonique a été établie avec succès entre l'utilisateur et son partenaire de dialogue, ajouter un canal de communication supplémentaire par HTTP, des données vidéo ou audio pouvant être transmises ou échangées par l'intermédiaire dudit texte.

8. Un agencement pour réaliser des champs d'attente multimodaux pour un utilisateur dans un réseau de télécommunications constitué de :
a) un récepteur d'appels téléphoniques (R), disposé dans un centre de commutation ou une passerelle (point de transfert) du réseau de télécommunications ou dans le cas d'un fournisseur de services, pour des appels téléphoniques (R) à partir d'un terminal analogique ou numérique (T),
b) un gestionnaire de dialogue (DM) connecté au destinataire pour des appels téléphoniques (R) et deux composants WEB (Q-Serv, Q-App), le premier composant WEB (Q-Serv) étant un service qui fournit une interface pour enregistrer des événements, et le troisième composant WEB mentionné ci-dessus (Q-App) est une application WEB, qui est rendue disponible spécifiquement pour le service concerné,
c) une base de données (DB) qui est reliée à un second composant WFB (Q-Dlg.), qui fournit une page WRB pour la mise en œuvre d'un dialogue avec l'utilisateur, et est connectée à la première composante WEB (Q-Serv), de sorte que des données peuvent être échangées, utilisées et modifiées dans la base de données (DB),
d) une borne compatible Internet (PC) qui est connectée à la fois au second composant WEB (Q-Dlg.) et au troisième composant WEB (Q-App), le gestionnaire de dialogue (DM) étant l'élément de liaison entre le côté des composants WEB (Q-Serv, Q-Dlg., Q-App) et le récepteur pour des appels téléphoniques (R) et fournit des interfaces sur les deux côtés et assure la synchronisation des états du système,
e) le service du premier composant WEB (Q-Serv) stocke temporairement les données dans la base de données (DB) et peut générer un code clé qui, suite aux appels, est renvoyé au récepteur pour des appels téléphoniques (R), le code clé pouvant être converti en un format, qui peut être transmis sur la connexion téléphonique et peut être présenté à l'utilisateur sur le terminal analogique ou numérique (T) et
f) le gestionnaire de dialogue (DM) synchroniser différents canaux de l'application WEB (Q-App) et/ou une application téléphonique, qui sont ainsi dans le même état, en ce que des appels de fonction peuvent être insérés dans l'application WEB (Q-App) et/ou l'application téléphonique, lesquels appels de fonction envoient des messages au gestionnaire de dialogue (DM) s'ils deviennent actifs, de sorte que des informations peuvent être rendues disponibles à l'utilisateur en parallèle avec le canal audio et le temps d'attente peut déjà être utilisé pour interroger certaines informations de l'appelant concernant sa personne et/ou sa demande ou pour donner des indications à lui.

9. L'agencement selon la revendication 8, dans lequel l'application est mise en œuvre sous la forme d'un moteur de recherche au moyen des deuxième et troisième composants WEB (Q-Dlg., Q-App), le second composant WEB (Q-Dlg.) ayant un portail WEB.
